# EUROPÄISCHE PATENTSCHRIFT

(11) **EP 1 241 759 B1**
(45) Veröffentlichungstag und Bekanntmachung des Hinweises auf die Patenterteilung: **13.09.2006**
(21) Anmeldenummer: 02001724.0
(22) Anmeldetag: 25.01.2002
(51) Int. Cl.: H02G 3/06

(54) **Formteil zum Verbinden von zwei oder mehr im Winkel zueinander verlegten Abschnitten eines Kabelkanals**
Shaped piece for connecting two or more cable duct sections angularly mounted
Pièce formée pour joindre deux ou plus tronçons de conduite de câbles disposés selon un angle

(30) Priorität: 16.03.2001 DE 10112700
(43) Veröffentlichungstag der Anmeldung: 18.09.2002
(73) Patentinhaber: Tehalit GmbH, 67716 Heltersberg (DE)
(72) Erfinder: Kany, Jean-Michel, 57910 Hambach (FR); Schnurr, Richard, 66957 Vinningen (DE); Warter, Jean-Luc, 67500 Haguenau (FR)
(74) Vertreter: Patentanwälte Möll und Bitterich

(56) Entgegenhaltungen:
- EP-A- 0 776 078
- EP-A- 0 933 851
- EP-A- 0 933 852
- EP-A- 1 094 580

## Beschreibung

Die Erfindung betrifft Formteile zum Verbinden von zwei oder mehr etwa im rechten Winkel zueinander verlegten Abschnitten eines Kabelkanals gemäß dem Oberbegriff des Anspruchs 1.

Kabelkanäle der hier relevanten Art umfassen im wesentlichen ein meist trogförmiges Unterteil, welches die Leitungen aufnimmt, und wenigstens einen auf das Unterteil lösbar aufsetzbaren Deckel. Während die Verlegung der Kanäle in gerader Linie unproblematisch ist, entstehen beim Verlegen um Ecken, das sind Außenecken, Innenecken oder Flachecken, sowie bei T-förmigen und kreuzförmigen Abzweigungen unschöne Stöße und Schnittkanten. Aus diesem Grunde gibt es zu allen Kanälen passende Formstücke in Form von Innenecken, Außenecken, Flachwinkeln, Endplatten sowie T- und Kreuzstücken.

Für eine nachträgliche Installation von Leitungen müssen die Formstücke ebenso wie die Deckel jederzeit wieder lösbar sein. Die Befestigung der Formstücke erfolgt daher mittels Steck-, Rast- oder Schnappverschlüssen.

Eine erste vorbekannte Lösung zeigt die EP 09 33 852 A. Bei dieser Lösung müssen die Kanalunterteile auf Gehrung geschnitten werden. Das ist zeitraubend und daher unbefriedigend.

Eine weitere Lösung ist bekannt aus der US 5 469 893. Diese Schrift offenbart Winkelstücke, T-Stücke und Kreuzstücke, die aus einem trogförmigen Unterteil und einem lösbar aufsetzbaren flachen Deckel bestehen. Der Querschnitt ist exakt an den Querschnitt der anstoßenden Kanalabschnitte angepasst. Für jeden Typ von Kabelkanal muss daher ein kompletter Satz von Formteilen produziert, gelagert, transportiert, bestellt und montiert werden.

Aus der DE 295 10 836 U ist bekannt, die angrenzenden und auf Gehrung geschnittenen Kanalunterteile mit Hilfe eines eingeschobenen Blechwinkels exakt zueinander zu justieren, so dass sich ein optisch einwandfreies Bild ergibt. Allerdings ist das Schneiden der Kanalabschnitte auf Gehrung und das Montieren der Blechwinkel einigermaßen zeit- und kostenaufwändig. Auch erlaubt sie nur exakt rechte Winkel; auch nur minimale Anpassungen an die tatsächlichen Gegebenheiten auf der Baustelle sind nicht möglich.

Während die Kabelkanäle in der Vergangenheit fast ausschließlich mit exakt rechtwinkligem und daher symmetrischem Querschnitt produziert wurden, erhalten sie in neuerer Zeit zunehmend optisch gefälligere Formen. Damit wird der Querschnitt jedoch asymmetrisch. Dies bedeutet, dass die Zahl der Formteile, mit deren Hilfe Flachwinkel und T-förmige Abzweigungen kaschiert werden, vervielfältigt werden muss. Das ist produktions-, lager- und bestelltechnisch äußerst unbefriedigend und führt in vielen Fällen dazu, dass der Installateur seine Arbeit nicht vollenden kann, weil die falschen Formteile bestellt oder geliefert wurden.

Einen solchen Sockelleistenkanal mit asymmetrischem Querschnitt und dazu passenden Formteilen in Form eines Außenecks, eines Innenecks und eines Abzweigelements zeigt die EP 1 094 580 A. Jedes Außeneck und jedes Inneneck besteht aus zwei Innenteilen, die auf das Kanalunterteil aufgesteckt werden, und zwei Außenteilen, die auf die Innenteile aufgerastet werden. Diese vier Einzelteile müssen in der zum jeweiligen Kanalunterteil passenden Form, Größe und Farbe produziert, gelagert, gelistet, bestellt, transportiert und montiert werden. Das ist äußerst unbefriedigend.

Der vorliegenden Erfindung liegt daher die Aufgabe zugrunde, eine Lösung für das genannte Problem anzugeben, wodurch mit einer minimalen Anzahl von Formteilen gearbeitet werden kann.

Diese Aufgabe wird gelöst durch eine Verbindungsvorrichtung mit den Merkmalen des Anspruchs 1.

Die vorliegende Erfindung benutzt zum Kaschieren der Ecken und Abzweigungen im Verlauf eines asymmetrischen Kabelkanals Formteile, die so großzügig geformt sind, dass sie immer passen. Der dabei unvermeidliche Spalt zwischen der Außenseite des Kabelkanals und der Innenseite der Formteile wird durch einen Winkeladapter geschlossen, der so aufgesetzt werden kann, wie es die Situation auf der Baustelle erfordert.

Gemäß einer Ausgestaltung der Erfindung besitzt der Winkeladapter Befestigungshaken, die mit den Deckelhalteprofilen der Kanalunterteile korrespondieren. Dadurch sitzen die Winkeladapter dauerhaft fest, können bei Bedarf jedoch auch wieder gelöst werden.

Zur Optimierung der Verbindung zwischen Winkeladapter und Formteil sind am Winkeladapter einerseits und am Formteil andererseits miteinander korrespondierende Verbindungseinrichtungen vorgesehen.

Gemäß einer Weiterbildung der Erfindung ist unter dem Formteil ein an einer Unterlage zu befestigendes Bodenteil vorgesehen, welches eine Bodenplatte mit Befestigungsöffnungen und mit einer zentralen Erhebung besitzt. An der zentralen Erhebung sitzt eine Rastvorrichtung, die mit einer Raste an der Unterseite des Formteils korrespondiert. Dank des Bodenteils sitzt das Formteil wesentlich fester; außerdem ist die elektrische Isolierung im Eckbereich zwischen den Kabeln oder basisisolierten Drähten und der Unterlage nicht unterbrochen.

Vorteilhafterweise sind an der Bodenplatte Stützleisten angeformt, die die Seitenwände des Formteils stützen. Sind diese Stützleisten trichterartig geformt, so erleichtern sie auch das korrekte Aufsetzen der Formteile. Die Stützleisten bringen außerdem die Bodenplatte in Abstand zur Unterlage, so dass die Formteile sich über die Bodenplatte aufschieben lassen.

Oft besteht die Notwendigkeit, von einem Kabelkanal mit großem Querschnitt einen Kabelkanal mit kleinerem oder anderweitig abweichenden Querschnitt abzweigen zu lassen. Auch hier müssten normalerweise auf jede Paarung von Kabelkanälen passende Formteile bereitgestellt werden, was in der Praxis jedoch kaum möglich ist und vom Anwender auch nicht akzeptiert würde.

Zur Lösung dieses Problems ist erfindungsgemäß zusätzlich eine Anpassungsplatte vorgesehen, die einen Außenrand, passend zur Innenseite des Oberteils, und vorbereitete Schneidrillen, passend zu einer Vielzahl von abzweigenden Kanalquerschnitten, besitzt. In diese Anpassungsplatte schneidet der Installateur eine Öffnung entsprechend dem abzweigenden Kanalquerschnitt. Nach der Montage der Kanäle, der Anpassungsplatte und des Formteils ist die Lücke zwischen Formteil und abzweigendem Kanal einwandfrei geschlossen.

Darüber hinaus bietet diese Anpassungsplatte im Neuzustand die Möglichkeit, nach einer kompletten Demontage eines abzweigenden Kanals die verbleibende Öffnung zu verschließen.

Es versteht sich, dass vorbereitete Schneidrillen auch an den Seitenwänden der Formteile selbst vorgesehen sein können. Dadurch hat der Installateur die Möglichkeit, ein für den größten Kanalquerschnitt bestimmtes Formteil auch mit kleineren Kanälen zu verwenden, indem er die überflüssigen Wandteile abschneidet.

Anhand der Zeichnung soll die Erfindung in Form von Ausführungsbeispielen näher erläutert werden. Es zeigen jeweils als Schrägansicht
- Fig. 1a, 1b und 1c drei Ansichten eines Winkeladapter,: Fig. 2 ein Bodenteil,
Fig. 3 eine Anpassungsplatte,
- Fig. 4a und 4b Außenansicht und Innenansicht eines Formteils für ein: Flacheck,
- Fig. 5 einen Ausschnitt aus einem Kabelkanal mit zwei Flachwinkeln,: Fig. 6 eine Innenansicht eines Formteils für ein Inneneck,
- Fig. 7 einen Ausschnitt aus einem Kabelkanal mit Inneneck und im Inneneck: abzweigenden Kabelkanal kleineren Querschnitts, und
- Fig. 8 einen Ausschnitt aus einem Kabelkanal mit einem T-förmig: abzweigenden Kabelkanal kleineren Querschnitts.

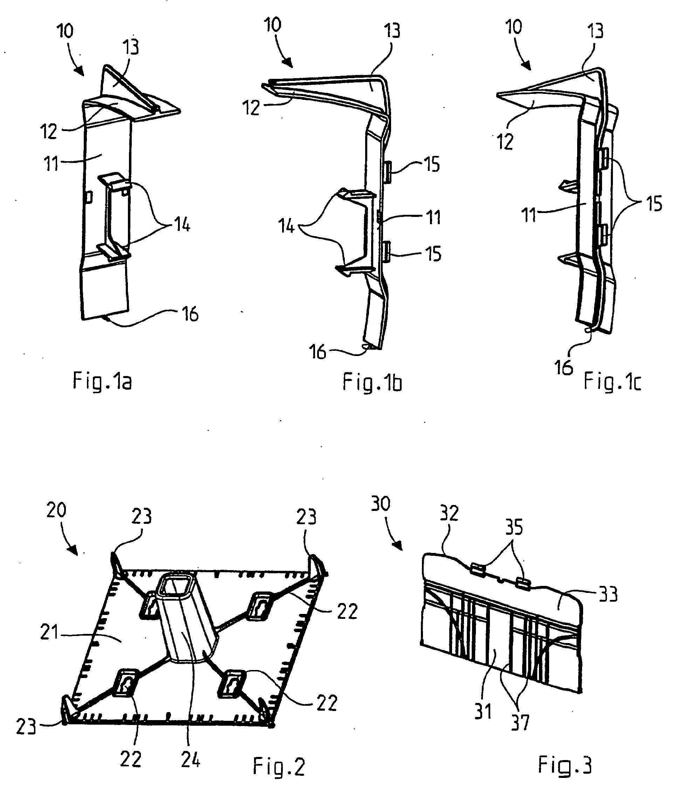

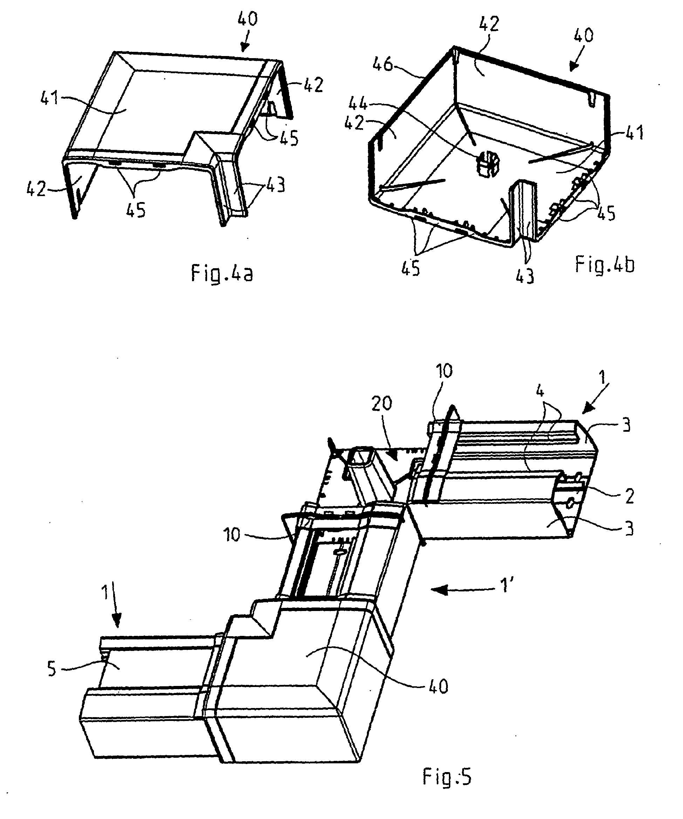

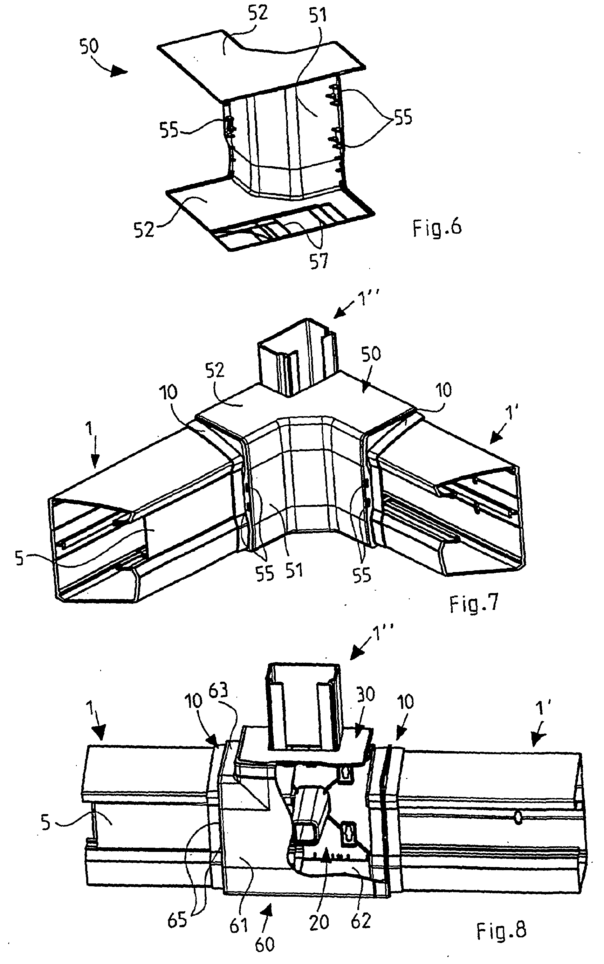

Die Fig. 1a, 1b und 1c zeigen drei Ansichten eines Winkeladapters 10, der den Spalt zwischen der Außenseite eines asymmetrischen Kanalabschnitts (Fig. 5, 7 und 8) und einem Formteil (Fig. 4, 6 und 8) schließt. Der Winkeladapter 10 besteht aus einem langen Schenkel 11 und einem kurzen Schenkel 12, deren Form der Außenseite des Kabelkanals entspricht. Zwei Verschlusshaken 14 ermöglichen die lösbare Befestigung des Winkeladapters 10 am Deckelhalteprofil 4 der Kanalabschnitte 1, 1' (Fig. 5).

An der Außenseite des Winkeladapters 10 erkennt man eine Leiste 13, deren Außenkante der Innenkante der Formteile entspricht. Im Bereich des langen Schenkels 11 sind an der Leiste 13 Verbindungseinrichtungen 15 vorgesehen, die mit entsprechenden Verbindungseinrichtungen an den Formteilen korrespondieren.

Fig. 2 zeigt eine Bodenplatte 20, die unterhalb der Formteile angebracht wird, wie in den Fig. 5 und 8 dargestellt. Das Bodenteil 20 besitzt eine Bodenplatte 21 mit Befestigungsöffnungen 22 für eine Schraubmontage. Im Zentrum der Bodenplatte erkennt man eine zentrale Erhebung 24, an deren oberem Ende eine Rasteinrichtung angeformt ist. Diese korrespondiert mit einer entsprechenden Raste an der Innenseite der Formteile. Einzelheiten werden anhand der Fig. 4b beschrieben.

Schließlich erkennt man in den vier Ecken der Bodenplatte 21 Stützleisten 23. Diese führen und stützen die Seitenwände der Formteile von innen, bringen die Bodenplatte auf Abstand zum Boden bzw. zur Wand, so dass die Formteile sich über die Bodenplatte aufsetzen lassen.

Fig. 3 zeigt eine sogenannte Anpassungsplatte 30. Diese besteht aus einer Platte 31, in die eine Reihe von Schneidrillen 37 eingeformt sind. Die Außenkante 32 der Anpassungsplatte 30 entspricht der Innenseite der Formteile und trägt Verbindungseinrichtungen 35 entsprechend den Verbindungseinrichtungen 15 am Winkeladapter 10.

Die Fig. 4a und 4b zeigen Außenansicht bzw. Innenansicht eines ersten Formteils 40 zur Kaschierung eines Flachecks. Man erkennt eine Deckenfläche 41 und im wesentlichen rechten Winkel dazu angeordnete Wandflächen 42, 43. Die Decken- und Wandflächen 41, 42 sind im wesentlichen eben. An den freien Kanten der Deckenfläche 41 erkennt man die Verbindungseinrichtungen 45, die mit den Verbindungseinrichtungen 15 am Winkeladapter 10 und den Verbindungseinrichtungen 35 an der Anpassungsplatte 30 korrespondieren.

Schließlich erkennt man in Fig. 4b noch die Raste 44, die mit der zentralen Erhebung 24 auf der Bodenplatte 20 korrespondiert.

Fig. 5 zeigt einen Ausschnitt aus einem Kabelkanal, der aus drei Kanalabschnitten 1, 1' zusammengesetzt ist, wobei die Kanalabschnitte 1, 1' zwei Flachwinkel bilden. Jeder Kanalabschnitt 1, 1' besitzt einen Boden 2, zwei Seitenwände 3 und je ein Deckelhalteprofil 4 an den Seitenwänden 3. Auf die Deckelhalteprofile 4 kann ein Kanaldeckel 5 aufgerastet werden.

Auf die einander zugewandten Enden der Kanalabschnitte 1, 1' werden Winkeladapter 10 aufgerastet. Je nach Orientierung der Winkeladapter 10 können unterschiedliche Flacheck-Kombinationen realisiert werden und zwar mit nur einem einzigen Flacheck-Formteil 40. Anschließend wird das Flacheck-Formteil 40 aufgerastet. Dabei schließen die Winkeladapter 10 die Lücke zwischen der im wesentlichen ebenen Innenseite des Formteils 40 und der asymmetrischen Außenseite der Kanalabschnitte 1, 1', so dass sich sowohl ein ästhetisches Bild ergibt als auch die elektrische Sicherheit gewährleistet ist.

Fig. 6 zeigt als zweites Ausführungsbeispiel ein Formteil 50 zur Kaschierung eines Innenecks. Auch dieses Formteil 50 besitzt eine Deckelfläche 51 und Seitenwände 52. An den freien Enden der Deckelfläche 51 erkennt man die Verbindungseinrichtungen 55, die mit den entsprechenden Verbindungseinrichtungen 15, 35 des Winkeladapters 10 bzw. der Anpassungsplatte 30 korrespondieren.

Schließlich erkennt man auf der Innenseite der Seitenwände 52 eingeformte Schneidrillen 57. Die Position dieser Schneidrillen 57 ist so gewählt, dass sie zu an dieser Stelle gegebenenfalls abzweigenden Kabelkanälen kleineren Querschnitts passt. Auf diese Weise bildet das Formteil 50 eine 3D-Abzweigungsmöglichkeit.

Diese Situation ist in Fig. 7 dargestellt. Man erkennt zwei Kanalabschnitte 1, 1', die einen Innenwinkel bilden, der durch das Formteil 50 kaschiert ist. Auch hier schließen die Winkeladapter 10 die Lücke zwischen Formteil 50 und Kabelkanal 1, 1'.

Im Eck zweigt ein Kanalabschnitt 1" kleineren Querschnitts ab. Dazu ist die Seitenwand 52 des Formteils 50 entlang der passenden Schneidrillen 57 ausgeschnitten.

Fig. 8 zeigt als drittes Ausführungsbeispiel eine T-förmige Abzweigung, wobei der abzweigende Kanalabschnitt 1" einen kleineren Querschnitt besitzt als die anderen Kanalabschnitte 1, 1'. Alle Kanalabschnitte 1, 1', 1" stoßen stumpf an eine Bodenplatte 20. Ein als T-Stück geformtes Formteil 60 deckt das Ganze ab, wobei auch in diesem Fall der Spalt zwischen Formteil 60 und den asymmetrischen Kanalabschnitten 1, 1' durch je einen Winkeladapter 10 geschlossen wird.

Da der abzweigende Kanalabschnitt 1" einen kleineren Querschnitt hat, würde ein unschöner und die elektrische Sicherheit gefährdender Spalt verbleiben. Dieser wird durch eine Anpassungsplatte 30 verschlossen. In diese Anpassungsplatte 30 wurde den Schneidrillen 37 folgend eine Öffnung geschnitten, passend zum Querschnitt des abzweigenden Kanalquerschnitts 1". Dadurch ergibt sich auch in einem solchen Sonderfall eine optisch und elektrisch einwandfreie Lösung.

## Patentansprüche

1. Verbindungsvorrichtung bestehend aus einem Formteil (40, 50, 60) zum Verbinden von zwei oder mehr etwa im rechten Winkel zueinander verlegten Abschnitten (1, 1', 1") eines Kabelkanals mit asymmetrischem Querschnitt, wobei jeder Kanalabschnitt (1, 1', 1") einen Boden (2), Seitenwände (3) und Deckelhalteprofile (4) an den Seitenwänden (3) besitzt und wobei das Formteil (40, 50, 60) nach Art einer Haube die anstoßenden Kanalabschnitte (1, 1', 1") übergreift, und Winkeladapter **gekennzeichnet durch** die Merkmale:
- das Formteil (40, 50, 60) besitzt im wesentlichen ebene und im rechten Winkel zueinander verlaufende Decken- und Wandflächen (41, 42, 43; 51, 52; 61, 62, 63),
- Winkeladapter (10) schließen den Spalt zwischen der Außenseite der asymmetrischen Kanalabschnitte (1, 1') und der Innenseite des Formteils (40, 50, 60).

2. Vorrichtung nach Anspruch 1, **gekennzeichnet durch** das Merkmal:
- der Winkeladapter (10) besitzt Befestigungshaken (14), die mit den Deckelhalteprofilen (4) korrespondieren.

3. Vorrichtung nach Anspruch 1 oder 2, **gekennzeichnet durch** das Merkmal:
- am Winkeladapter (10) einerseits und am Formteil (40, 50, 60) andererseits sind miteinander korrespondierende Verbindungseinrichtungen (15, 45, 55, 65) vorgesehen.

4. Vorrichtung nach Anspruch 1, 2 oder 3, **gekennzeichnet durch** die Merkmale:
- unter dem Formteil (40, 60) ist ein an einer Unterlage zu befestigendes Bodenteil (20) vorgesehen,
- das Bodenteil (20) besitzt
- eine Bodenplatte (21) mit Befestigungsöffnungen (22)
- und eine zentrale Erhebung (24) mit einer Rastvorrichtung, - das Formteil (40, 50) besitzt eine mit der zentralen Erhebung (14) korrespondierende Raste (44).
- das Formteil (40, 50) besitzt eine mit der zentralen Erhebung (14) korrespondierende Raste (44).

5. Vorrichtung nach Anspruch 4, **gekennzeichnet durch** das Merkmal:
- an der Bodenplatte (21) sind Stützleisten (23) zum Stützen und Führen der Seitenwände des Formteils (40, 60) und zum Halten der Bodenplatte (21) auf Abstand zur Unterlage vorgesehen.

6. Vorrichtung nach einem der Ansprüche 1 bis 5, **gekennzeichnet durch** das Merkmal:
- am Übergang zu einem Kanalabschnitt (1") mit abweichendem Querschnitt ist eine Anpassungsplatte (30) vorgesehen,
- die Anpassungsplatte (30) umfasst
- einen Außenrand (32), passend zur Innenseite des Oberteils (40, 50),
- und vorbereitete Schneidrillen (37), passend zu diversen Kanalquerschnitten.

7. Vorrichtung nach einem der Ansprüche 1 bis 6, **gekennzeichnet durch** das Merkmal:
- an den Seitenwänden (42, 52, 62) sind vorbereitete Schneidrillen (57) vorgesehen.

## Claims

1. Connecting device consisting of a shaped part (40, 50, 60) for connecting two or more sections (1, 1', 1"), laid approximately at a right angle to one another, of a cable duct with an asymmetrical cross section, wherein each duct section (1, 1', 1") has a bottom (2), side walls (3) and cover retaining profiles (4) at the side walls (3), and wherein the shaped part (40, 50, 60) engages over the abutting duct sections (1, 1', 1") like a hood, and angle adapters, **characterised by** the features:
- the shaped part (40, 50, 60) has substantially plane top and wall faces (41, 42, 43; 51, 52; 61,62,63) extending at a right angle to one another,
- angle adapters (10) close the gap between the outside of the asymmetrical duct sections (1, 1') and the inside of the shaped part (40, 50, 60).

2. Device according to Claim 1, **characterised by** the feature:
- the angle adapter (10) has fastening hooks (14) which correspond with the cover retaining profiles (4).

3. Device according to Claim 1 or 2, **characterised by** the feature:
- connecting devices (15, 45, 55, 65), which correspond with one another, are provided on the angle adapter (10) on one side and on the shaped part (40, 50, 60) on the other.

4. Device according to Claim 1, 2 or 3, **characterised by** the features:
- a bottom part (20), which is to be fastened to a base, is provided below the shaped part (40, 60),
- the bottom part (20) has
- a bottom plate (21) with fastening openings (22)
- and a central elevation (24) with a locking device,
- the shaped part (40, 50) has a catch (44) which corresponds with the central elevation (14).

5. Device according to Claim 4, **characterised by** the feature:
- support ribs (23) are provided on the bottom plate (21) to support and guide the side walls of the shaped part (40, 60) and for holding the bottom plate (21) at a spacing from the base.

6. Device according to any one of Claims 1 to 5, **characterised by** the features:
- an adapter plate (30) is provided at the transition to a duct section (1") with a differing cross section,
- the adapter plate (30) comprises
- an outer edge (32) matching the inside of the top part (40, 50),
- and prepared cutting grooves (37) matching various duct cross sections.

7. Device according to any one of Claims 1 to 6, **characterised by** the feature:
- prepared cutting groves (57) are provided at the side walls (42, 52, 62).

## Revendications

1. Dispositif de liaison comprenant une pièce moulée (40, 50, 60), pour solidariser des tronçons (1, 1', 1") d'un canal de câblage de section transversale asymétrique, prévus au nombre de deux ou plus et mutuellement agencés en décrivant sensiblement un angle droit, chaque tronçon de canal (1, 1', 1") comprenant un fond (2), des parois latérales (3) et des profils (4) de retenue d'un couvercle sur lesdites parois latérales (3), et la pièce moulée (40, 50, 60) coiffant les tronçons de canal aboutés (1, 1', 1 "), à la manière d'un capot ; et des adaptateurs en cornière,
**caractérisé par** les particularités suivantes :
- la pièce moulée (40, 50, 60) possède des surfaces de recouvrement et de cloisonnement (41, 42, 43 ; 51, 52 ; 61, 62, 63) sensiblement planes, décrivant mutuellement un angle droit,
- des adaptateurs en cornière (10) ferment l'interstice entre la face extérieure des tronçons de canal asymétriques (1, 1') et la face intérieure de la pièce moulée (40, 50, 60).

2. Dispositif selon la revendication 1, **caractérisé par** la particularité suivante :
- l'adaptateur en cornière (10) possède des crochets de fixation (14) qui concordent avec les profils (4) de retenue d'un couvercle.

3. Dispositif selon la revendication 1 ou 2, **caractérisé par** la particularité suivante :
- des systèmes de liaison (15, 45, 55, 65) mutuellement complémentaires sont prévus, d'une part, sur l'adaptateur en cornière (10) et, d'autre part, sur la pièce moulée (40, 50, 60).

4. Dispositif selon la revendication 1, 2 ou 3, **caractérisé par** les particularités suivantes :
- une partie de fond (20), devant être fixée à une structure sous-jacente, est prévue au-dessous de la pièce moulée (40, 60),
- ladite partie de fond (20) possède
- une plaque de fond (21) munie d'orifices de fixation (22)
- et une protubérance centrale (24) pourvue d'un dispositif de crantage,
- la pièce moulée (40, 50) possède un organe encliquetable (44) complémentaire de la protubérance centrale (14).

5. Dispositif selon la revendication 4, **caractérisé par** la particularité suivante :
- des mentonnets d'appui (23) sont prévus, sur la plaque de fond (21), pour soutenir et guider les parois latérales de la pièce moulée (40, 60) et pour maintenir ladite plaque de fond (21) à distance vis-à-vis de la structure sous-jacente.

6. Dispositif selon l'une des revendications 1 à 5, **caractérisé par** les particularités suivantes :
- une platine d'adaptation (30) est prévue à la transition avec un tronçon de canal (1") de section transversale différente,
- ladite platine d'adaptation (30) comprend
- un bord extérieur (32) s'adaptant à la face intérieure de la partie supérieure (40, 50),
- et des striures de sectionnement préfaçonnées (37), s'adaptant à diverses sections transversales de canaux.

7. Dispositif selon l'une des revendications 1 à 6, **caractérisé par** la particularité suivante :
- des striures de sectionnement préfaçonnées (57) sont prévues sur les parois latérales (42, 52, 62).
